(19) **Europäisches Patentamt / European Patent Office / Office européen des brevets**

(11) **EP 4 497 987 A1**

(12) # DEMANDE DE BREVET EUROPEEN

(43) Date de publication:
29.01.2025 Bulletin 2025/05

(51) Classification Internationale des Brevets (IPC):
$F16L\ 37/084^{(2006.01)}$    $F16L\ 37/127^{(2006.01)}$
$F16L\ 37/23^{(2006.01)}$    $F16L\ 37/34^{(2006.01)}$
$B33Y\ 80/00^{(2015.01)}$

(21) Numéro de dépôt: 24191226.0

(22) Date de dépôt: 26.07.2024

(52) Classification Coopérative des Brevets (CPC):
F16L 37/127; B33Y 10/00; B33Y 80/00;
F16L 37/084; F16L 37/23; F16L 37/34

(84) Etats contractants désignés:
AL AT BE BG CH CY CZ DE DK EE ES FI FR GB
GR HR HU IE IS IT LI LT LU LV MC ME MK MT NL
NO PL PT RO RS SE SI SK SM TR
Etats d'extension désignés:
BA
Etats de validation désignés:
GE KH MA MD TN

(30) Priorité: 27.07.2023 FR 2308106

(71) Demandeur: Staubli Faverges
74210 Faverges-Seythenex (FR)

(72) Inventeur: DURIEUX, Christophe
73200 GILLY SUR ISERE (FR)

(74) Mandataire: Lavoix
62, rue de Bonnel
69448 Lyon Cedex 03 (FR)

(54) **ELÉMENT DE RACCORD ET PROCÉDÉ DE FABRICATION D'UN TEL ÉLÉMENT DE RACCORD**

(57) La présente invention concerne un élément (2) de raccord rapide comprenant un corps monobloc (6) et un poussoir (14) prisonnier et mobile dans le corps. Le corps (6) est pourvu d'au moins une surface radiale interne de guidage (644, 646). Le poussoir (14) est pourvu d'au moins une surface radiale externe de guidage (144, 146) qui coopère avec la surface radiale interne de guidage. Des sections d'une ouverture proximale (67) et d'une embouchure distale (63) du corps (6) ont des dimensions maximale (D67, D60) inférieures à un encombrement radial (ℓ14, D14) du poussoir (14). Le poussoir est mobile, dans un volume interne du corps, jusqu'à une position de référence, dans laquelle la surface radiale externe (144, 146) du poussoir est dégagée de toute surface radiale interne (644, 646) du corps (6), et réciproquement.

EP 4 497 987 A1

**Description**

La présente invention concerne un élément de raccord pour la connexion de canalisations de fluide, ainsi qu'un procédé de fabrication d'un tel élément de raccord rapide.

Dans le domaine des raccords rapides de connexion de canalisation de fluide, il est connu de monter, dans le corps d'un élément de raccord, différentes pièces, dont certaines coulissent longitudinalement par rapport à ce corps. Pour pouvoir loger ces pièces l'une dans l'autre, il est souvent nécessaire de prévoir le corps en plusieurs parties car les orifices prévus aux extrémités proximale et distale de ce corps sont de dimensions transversales réduites, incompatibles avec la mise en place d'une pièce coulissante à l'intérieur du corps.

D'autre part, il est connu de WO2012/166546A2 d'appliquer une technique de fabrication additive dans le domaine des raccords fluidiques. Cette technique est utilisable pour la fabrication d'un corps extérieur de raccord, y compris avec une configuration coudée. Dans ce type de matériel, un joint peut être fabriqué simultanément au corps, dans une matière différente. Il n'est pas prévu qu'une pièce puisse coulisser à l'intérieur du corps, ce qui limite l'application de cette technologie à un type particulier d'éléments de raccord.

C'est à ces inconvénients qu'entend plus particulièrement remédier l'invention en proposant un nouvel élément de raccord rapide de connexion de canalisation de fluide, compatible avec une fabrication additive et qui peut comporter un élément coulissant. A cet effet, l'invention a pour objet un élément de raccord rapide de connexion de canalisations de fluide, cet élément de raccord comprenant un corps monobloc définissant un passage s'étendant selon un axe longitudinal de l'élément de raccord, entre une extrémité proximale et une extrémité distale, l'extrémité proximale étant configurée pour être raccordée à une canalisation de fluide et définissant une ouverture proximale de passage du fluide ou d'un conduit dans lequel circule le fluide et l'extrémité distale comportant une embouchure distale de réception d'un élément de raccord complémentaire. Selon l'invention,

- l'élément de raccord comprend un poussoir monté dans le corps et mobile le long de l'axe longitudinal, entre une position avant du côté de l'extrémité distale et une position arrière du côté de l'extrémité proximale,
- le corps est pourvu d'au moins une surface radiale interne de guidage ;
- le poussoir est pourvu d'au moins une surface radiale externe de guidage configurée pour coopérer par engagement avec la surface radiale interne de guidage pour guider le poussoir lors de ses déplacements selon l'axe longitudinal, entre ses positions avant et arrière ;

- le poussoir a un encombrement radial défini par sa plus grande dimension radiale,
- une section de l'ouverture proximale, transversale à l'axe longitudinal, a une dimension maximale inférieure à l'encombrement radial du poussoir ;
- une section de l'embouchure distale, transversale à l'axe longitudinal, a une dimension maximale inférieure à l'encombrement radial du poussoir ;
- le poussoir est monté prisonnier dans un volume interne du corps ; et
- le poussoir est mobile, dans le volume interne du corps, jusqu'à une position de référence, dans laquelle la ou chaque surface radiale externe du poussoir est dégagée de toute surface radiale interne du corps et réciproquement.

Grâce à l'invention, la possibilité de déplacer le poussoir jusqu'à la position de référence permet que le corps et le poussoir peuvent être réalisés par fabrication additive, dans une configuration où le poussoir est dans la position de référence, sans que cela soit gênant pour la réalisation des surfaces radiales internes ou externes de guidage, qui peuvent être définies avec une bonne précision. Le poussoir n'a pas besoin d'être introduit dans le corps lors une étape ultérieure du procédé de fabrication, ce qui simplifie ce procédé.

Selon des aspects avantageux mais non obligatoires de l'invention, un tel élément de raccord peut incorporer une ou plusieurs des caractéristiques suivantes, prise(s) selon toute combinaison techniquement admissible

- Lorsque le poussoir est dans la position de référence, un jeu entre une surface du poussoir et une surface radiale interne du corps en regard de la surface du poussoir a une épaisseur radiale strictement supérieure à l'épaisseur radiale d'un jeu de guidage entre la surface radiale externe du poussoir et la surface radiale interne du corps engagées l'une dans l'autre.
- Le poussoir est pourvu de deux surfaces radiales externes de guidage, espacées l'une de l'autre le long de l'axe longitudinal, le corps est pourvu de deux surfaces radiales internes de guidage,chacune des surfaces radiales internes de guidage est configurée pour coopérer par engagement avec une surface radiale interne de guidage pour guider le poussoir lors de ses déplacement selon l'axe longitudinal, entre ses positions avant et arrière, et lorsque le poussoir est dans la position de référence, ses deux surfaces radiales externes de guidage sont dégagées des deux surfaces radiales internes de guidage du corps.
- La surface radiale externe de guidage est inscrite dans un premier cylindre à base circulaire, la surface radiale interne de guidage est inscrite dans un deuxième cylindre à base circulaire et le diamètre du premier cylindre est égal au diamètre du deuxième cylindre, au jeu de guidage près.

- Des cannelures de dégagement sont ménagées dans la surface radiale interne de guidage.
- Des cannelures de dégagement sont ménagées dans la surface radiale externe de guidage.
- La surface radiale externe de guidage a une première longueur, mesurée parallèlement à l'axe longitudinal, la surface radiale interne de guidage a une deuxième longueur, mesurée parallèlement à l'axe longitudinal et la deuxième longueur est supérieure ou égale à la somme de la première longueur et d'une course du poussoir entre ses positions avant et arrière ou la première longueur est supérieure ou égale à la somme de la deuxième longueur et de la course du poussoir entre ses positions avant et arrière.
- L'élément de raccord comprend une canule définissant un passage de fluide et s'étendant selon un axe longitudinal de l'élément de raccord, entre une partie avant configurée pour l'emmanchement d'une durite et une partie arrière destinée à être raccordée à la canalisation de fluide, le corps monobloc s'étendant selon l'axe longitudinal autour de, et solidairement à, la canule et définissant une embouchure d'accès à la partie avant de la canule, une première mâchoire, mobile en rotation, autour d'un premier axe de rotation, perpendiculaire à, et décalé de, l'axe longitudinal, entre

  ○ une position de serrage dans laquelle la première mâchoire presse la durite contre la partie avant de la canule, dans une zone comprise, radialement à l'axe longitudinal, entre l'axe longitudinal et le premier axe de rotation et délimitée, le long de l'axe longitudinal, par un plan frontière, perpendiculaire à l'axe longitudinal et distant du premier axe de rotation d'une première distance, mesurée parallèlement à l'axe longitudinal, qui est non nulle, et
  ○ une position de retrait dans laquelle la première mâchoire ne presse pas la durite contre la partie avant de la canule,

  un organe de manoeuvre, accessible depuis l'extérieur du corps, pour le déplacement de la première mâchoire, entre sa position de serrage et sa position relâchée, un organe de rappel élastique du poussoir vers sa position avant, alors que le poussoir est logé prisonnier dans le volume interne du corps, autour de la canule et pourvu d'une première surface d'appui contre la première mâchoire, la première surface d'appui du poussoir est configurée pour exercer sur la première mâchoire un effort de déplacement de la première mâchoire de sa position relâchée vers sa position de serrage, la première surface d'appui est disposée, par rapport à l'axe longitudinal, à l'opposé du premier axe de rotation et lorsque la première mâchoire est dans sa position de serrage, avec la première surface d'appui contre la première mâchoire, un premier écart radial, mesuré perpendiculairement à l'axe longitudinal, entre le premier axe de rotation et un point de contact de la surface de réception d'effort de la première mâchoire et de la première surface d'appui a une valeur supérieure à la valeur de la première distance.
- Le corps comprend une partie interne pourvue de lumières qui débouchent dans l'embouchure et une partie externe montée autour de la partie interne et mobile, par rapport à la partie interne, en translation le long de l'axe longitudinal, l'élément de raccord comprend

  ○ des organes de verrouillage, mobiles dans les lumières de la partie interne du corps, entre une position de verrouillage, dans laquelle ils font saillie dans l'embouchure, et une position dégagée, dans laquelle ils ne font pas saillie dans l'embouchure,
  ○ un organe de rappel élastique du poussoir vers sa position avant ;

  la partie externe du corps est mobile par rapport à la partie interne du corps entre une première position dans laquelle elle maintient les organes de verrouillage dans leur position de verrouillage et une deuxième position dans laquelle elle permet au organes de verrouillages de rejoindre leur position dégagée et le poussoir est monté radialement entre les parties interne et externe du corps et exerce sur les organes de verrouillage un effort de renvoi vers leur position de verrouillage.

Selon un deuxième aspect, l'invention concerne un procédé de fabrication d'un élément de raccord tel que mentionné ci-dessus qui comprend une étape a) consistant à réaliser simultanément par fabrication additive une partie au moins du corps monobloc et le poussoir, alors que le poussoir est dans sa position de référence.

L'invention sera mieux comprise et d'autres avantages de celle-ci apparaitront plus clairement à la lumière de la description qui va suivre de quatre modes de réalisation d'un élément de raccord rapide conforme à son principe et de son procédé de fabrication, donnée uniquement à titre d'exemple et faite en référence aux dessins annexés dans lesquels :

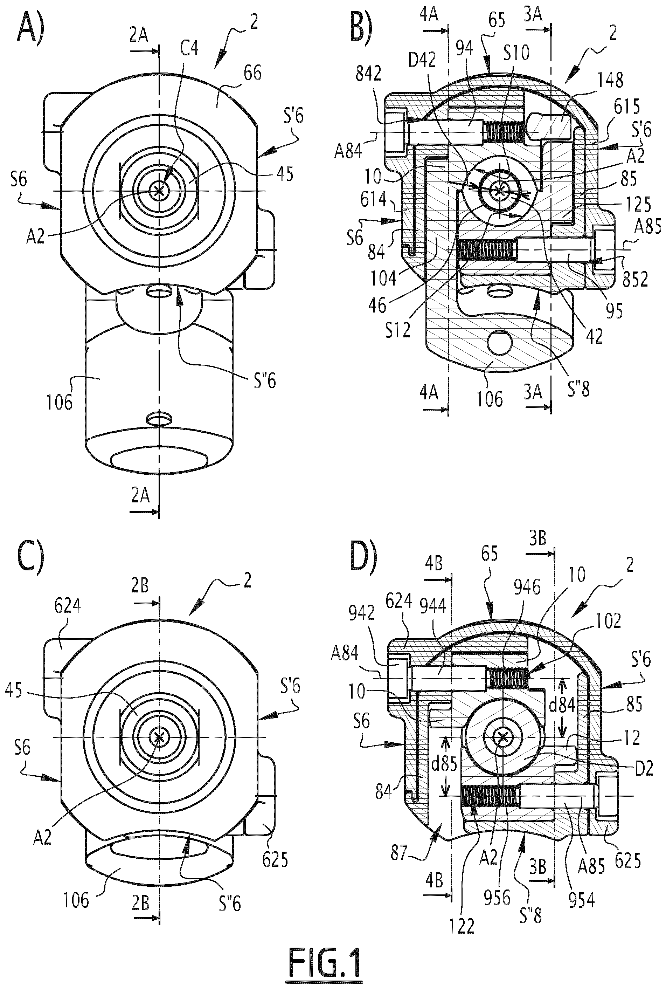

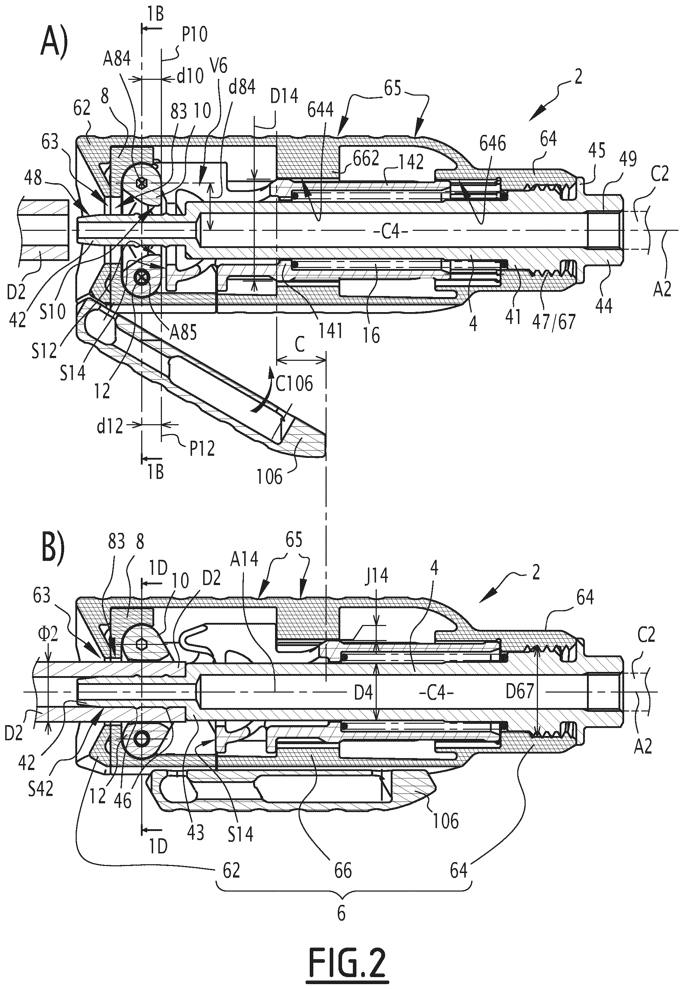

[Fig, 1] La figure 1 représente, sur quatre inserts A), B), C) et D), deux vues en élévation et deux coupes transversales d'un élément de raccord conforme à l'invention, dans deux configurations différentes. L'insert B) représente une coupe selon le plan 1B-1B visible sur l'insert A) de la figure 2. L'insert D) représente une coupe et selon le plan 1D-1D visible sur l'insert B) de la figure 2.

[Fig. 2] La figure 2 représente, sur deux inserts A) et B), deux coupes longitudinales de l'élément de raccord, prises respectivement selon le plan 2A-2A et selon le plan 2B-2B aux inserts A) et C) de la figure 1.

[Fig. 3] La figure 3 représente, sur deux inserts A) et B), deux coupes longitudinales du même élément de raccord, prises respectivement selon le plan 3A-3A et selon le plan 3B-3B sur les inserts B) et D) de la figure 1.

[Fig. 4] La figure 4 représente, sur deux inserts A) et B), deux coupes longitudinales du même élément de raccord, prises respectivement selon le plan 4A-4A et selon le plan 4B-4B sur les inserts B) et D) de la figure 1.

[Fig. 5] La figure 5 représente, sur deux inserts A) et B), l'élément de raccord en perspective et en vue éclatée, ainsi qu'un poussoir appartenant à l'élément de raccord, également en perspective.

[Fig. 6] La figure 6 représente, sur trois inserts A), B) et C) une vue en élévation et des coupes transversales d'un corps et d'un poussoir de l'élément de raccord des figures 1 à 5 en cours de fabrication, ainsi que, sur un insert D), une coupe longitudinale en perspective du corps, à plus petite échelle ;

[Fig. 7] La figure 7 représente, sur deux inserts A et B, deux coupes longitudinales du corps et du poussoir, prises respectivement selon le plan 7A-7A à l'insert A) de la figure 6 et selon la ligne de coupe 7B-7B à l'insert A) de la figure 7 ;

[Fig. 8] La figure 8 représente, sur des inserts A), B), C), D) et E) comparables aux figures 6 et 7, un corps et un poussoir d'un élément de raccord conforme à un deuxième mode de réalisation de l'invention.

[Fig. 9] La figure 9 représente, sur deux inserts A) et B), respectivement une coupe longitudinale d'un corps et d'un poussoir d'un élément de raccord conforme à un troisième mode de réalisation de l'invention, en cours de fabrication, et une coupe longitudinale de cet élément de raccord prêt à être utilisé;

[Fig. 10] La figure 10 représente, sur trois inserts A), B) et C), un élément de raccord conforme à un quatrième mode de réalisation, plus précisément une coupe longitudinale de cet élément de raccord sur l'insert A), et deux coupes longitudinales d'une partie externe du corps et d'un poussoir de cet élément de raccord lors de deux étapes de fabrication de celui-ci.

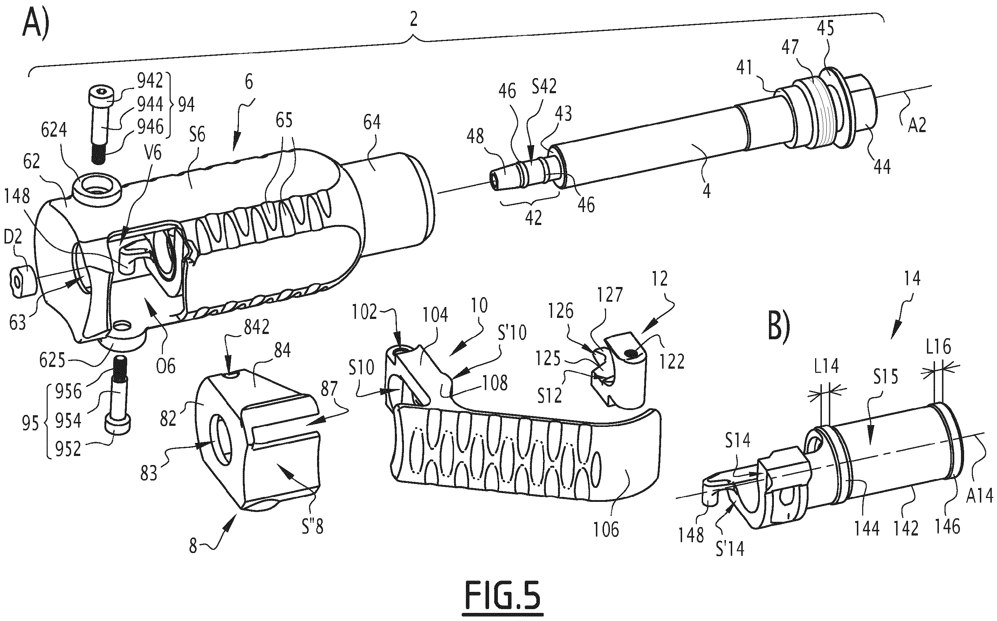

L'élément de raccord rapide 2 représenté sur les figures 1 à 5 est prévu pour être raccordé d'une part à une canalisation C2 et d'autre part à une durite D2. Pour la clarté du dessin, la canalisation C2 est représentée uniquement à la figure 2, en traits mixtes, et la durite D2 est représentée uniquement aux figures 1, 2, 4 et 5. Une durite est un type particulier de canalisation d'écoulement de fluide, qui a la particularité d'être souple et de pouvoir se dilater radialement. La durite D2 forme ici un élément de raccord complémentaire de l'élément de raccord 2.

Le fluide transitant dans la canalisation C2 et dans la durite D2 peut être un liquide ou un gaz, notamment avec une pression relativement élevée, par exemple supérieure ou égale à 1 MPa.

On définit le côté avant de l'élément de raccord 2 comme le côté tourné vers la durite D2 lors l'emmanchement de l'élément de raccord 2 et de la durite D2 ou lorsque ces éléments sont connectés. Sur les figures 2 à 5, le côté avant de l'élément de raccord 2 est orienté vers la gauche et son coté arrière est orienté vers la droite. L'élément de raccord 2 s'étend, entre ses cotés avant et arrière, selon un axe longitudinal A2.

Les vues en élévation de la figure 1 sont prises depuis l'arrière de l'élément de raccord 2.

L'élément de raccord comprend une canule 4 qui s'étend selon l'axe longitudinal A2 et qui présente une partie avant chanfreinée 42 et une partie arrière taraudée 44. La canule 4 définit un conduit C4 de passage de fluide entre ses parties avant et arrière 42 et 44.

On note D4 le diamètre externe de la canule 4 sur la plus grosse partie de sa longueur, entre ses parties avant et arrière. On note D42 le diamètre externe de la partie avant 42, qui est réduit par rapport au diamètre externe D4. La section de passage du conduit C4 présente, au niveau de la partie avant 42, une aire inférieure à son aire dans la partie intermédiaire et au niveau de la partie arrière 44.

La partie avant 42 de la canule 4 est pourvue de deux nervures périphériques 46 qui constituent des reliefs de retenue de la durite D2 sur cette partie.

La partie avant 42 porte un chanfrein 48 convergeant vers l'avant et dont la fonction est de faciliter l'introduction de la canule 4 dans la durite D2.

La partie arrière 44 est équipée d'un taraudage interne 49 de montage de la conduite C2.

Dans l'exemple des figures, la canule 4 est monobloc. En variante non représentée, elle peut être constituée de plusieurs pièces assemblées de façon étanche les unes avec les autres.

A proximité de sa partie arrière 44, la canule 4 comprend une collerette 45 et un filetage externe 47.

L'élément de raccord 2 comprend également un corps 6 qui est monobloc et qui s'étend le long de l'axe longitudinal A2, entre une extrémité avant 62 et une extrémité arrière 64. Vu à partir de la canalisation C2, l'extrémité arrière 64 est une extrémité proximale et l'extrémité avant 62 est une extrémité distale du corps 6.

Au niveau de son extrémité avant ou distale 62, le corps 6 définit une embouchure 63 centrée sur l'axe longitudinal A2 et à travers laquelle fait saillie la partie avant 42 de la canule 4, vers l'avant de l'élément de raccord 2. L'embouchure 63 donne accès à la partie avant 42 de la canule.

On note D63 le diamètre de l'embouchure 63.

On note V6 le volume interne du corps 6. La canule est, pour l'essentiel reçue dans le volume interne V6, sauf la portion de sa partie avant 42 en saillie à travers l'embouchure 63.

Au niveau de son extrémité arrière 64, le corps 4 est pourvu d'un taraudage 67 qui coopère avec le filetage 47 de la canule 4 pour visser la canule 4 dans le corps 6 jusqu'à ce que la collerette 45 vienne en appui contre l'extrémité arrière ou proximale 64, ce qui solidarise les éléments 4 et 6 et positionne la canule 4 par rapport au corps 6, le long de l'axe longitudinal A2.

On note D67 le diamètre du taraudage 67. Ce taraudage définit une ouverture proximale de passage de la canule 4 dans le corps 6.

On note 66 la partie intermédiaire du corps 6 définie, le long de l'axe A2 entre ses extrémités avant et arrière 62 et 64. Au niveau de cette partie intermédiaire 66, le corps 62 présente une géométrie extérieure globalement en forme de cylindre tronqué par deux plans, parallèles aux plans des figures 2 à 4 et qui définissent deux surfaces latérales S6 et S'6 disposées de part et d'autre du plan de coupe de l'insert A) de la figure 2. On note respectivement 614 et 615 les parois latérales globalement planes du corps 6 qui définissent, sur l'extérieur, les surfaces S6 et S'6.

Le corps 6 définit également une surface externe concave S"6 qui est située entre les surfaces S6 et S'6, en partie inférieure du corps 6 dans la position des figures 1 à 4.

Entre les surfaces S6, S'6 et S"6, le corps 6 porte des stries externes 65 qui facilitent sa prise en main.

Du côté de la surface concave S"6 et sur l'avant de celle-ci, le corps 6 définit une ouverture O6 de forme globalement rectangulaire et à travers laquelle un boitier 8 est engagé dans le volume interne V6 du corps 6.

Ce boitier 8 comprend une face avant 82 qui est perpendiculaire à l'axe longitudinal A2 en configuration montée du boitier 8 dans le corps 6 et dans laquelle est ménagé un orifice circulaire 83 qui est aligné avec l'embouchure 63 dans cette configuration. L'orifice 83 permet le passage de la partie avant 42 de la canule 4 et de la durite D2.

Le boitier 8 comprend deux parois latérales 84 et 85 qui s'étendent parallèlement l'une à l'autre à partir d'un couvercle 86. Le couvercle 86 obture l'ouverture O6 en configuration montée du boitier 8 dans le corps 6 et définit une surface concave S"8 qui est affleurante avec la surface S"6 du corps 6 dans cette configuration.

Une encoche 87 est prévue dans le couvercle 86 et débouche sur le côté arrière du boitier 8.

En configuration montée du boitier 8 dans le corps 6, les parois latérales 84 et 85 s'étendent parallèlement aux parois latérales 614 et 615, donc parallèlement aux surfaces S6 et S'6. De préférence, les parois latérales 84 et 85 s'étendent respectivement le long des parois latérales 614 et 615, dans le volume interne V6, donc sur l'intérieur des parois latérales 614 et 615.

La paroi latérale 84 est percée d'un orifice traversant 842 ménagé au niveau d'une portion en surépaisseur de la paroi latérale 84 et qui définit un palier centré sur un axe A84 perpendiculaire à l'axe longitudinal A2 et distant de celui-ci d'une distance d84, mesurée perpendiculairement aux axes A2 et A84, qui est non nulle. De la même façon, la paroi latérale 85 est percée d'un orifice traversant 852 ménagé au niveau d'une portion en surépaisseur de la paroi 85. L'orifice traversant 852 définit un palier centré sur un axe A85. L'axe A85 est perpendiculaire à l'axe A2 et situé à une distance non nulle d85 de l'axe A2, cette distance d85 étant mesurée perpendiculairement aux axes A2 et A85.

Avantageusement, et comme représenté sur les figures, les axes A84 et A85 sont parallèles et les distances d84 et d85 sont égales. Ainsi, dans un plan transversal de l'élément de raccord 2, c'est-à-dire un plan perpendiculaire à l'axe longitudinal A2, les axes A84 et A85 sont symétriques par rapport à l'axe longitudinal A2. Ceci n'est toutefois pas obligatoire.

Le corps 6 est pourvu, au niveau de ses surfaces 614 et 615, de deux sièges 624 et 625 qui sont respectivement alignés avec les orifices traversant 842 et 852 et centrés sur les axes A84 et A85 en configuration montée du boitier 8 dans le corps 6.

L'élément de raccord 2 comprend également une première mâchoire 10 et une deuxième mâchoire 12.

La première mâchoire 10 est articulée autour de l'axe A84 sur le corps 6 équipé du boitier 8. Pour ce faire, une première vis décolletée 94 est insérée dans le palier formé par l'orifice traversant 842 en traversant le siège 624 et en étant vissée dans la mâchoire 10. La tête 942 de la vis 94 est reçue dans le siège 624, alors que sa tige 944 traverse l'orifice 842 et est vissée, par une partie filetée 946, dans un orifice taraudé 102 de la mâchoire 10.

De façon comparable, la deuxième mâchoire 12 est articulée autour de l'axe A85 au moyen d'une vis décolletée 95 dont la tête 952 est reçue dans le siège 625, dont la tige 954 traverse l'orifice 852 et est vissée, par une partie filetée 956, dans un orifice taraudé 122 de la mâchoire 12.

Chacune des première et deuxième mâchoires 10 et 12 est mobile, respectivement autour de l'axe A84 ou de l'axe A85, par rapport au corps 6 équipé du boitier 8, entre une position de serrage et une position de retrait, autrement dit une position relâchée. L'axe A84 est ainsi un premier axe de rotation de la première mâchoire 10, alors que l'axe A85 est un deuxième axe de rotation de la deuxième mâchoire 12. Dans sa position de serrage, si la durite D2 est emmanchée sur la canule 4, la mâchoire 10 ou 12 presse la durite contre la surface radiale externe S42 de la partie avant 42 de la canule. Dans sa position de retrait, la mâchoire 10 ou 12 ne presse pas la durite contre la surface radiale externe de partie avant de la canule.

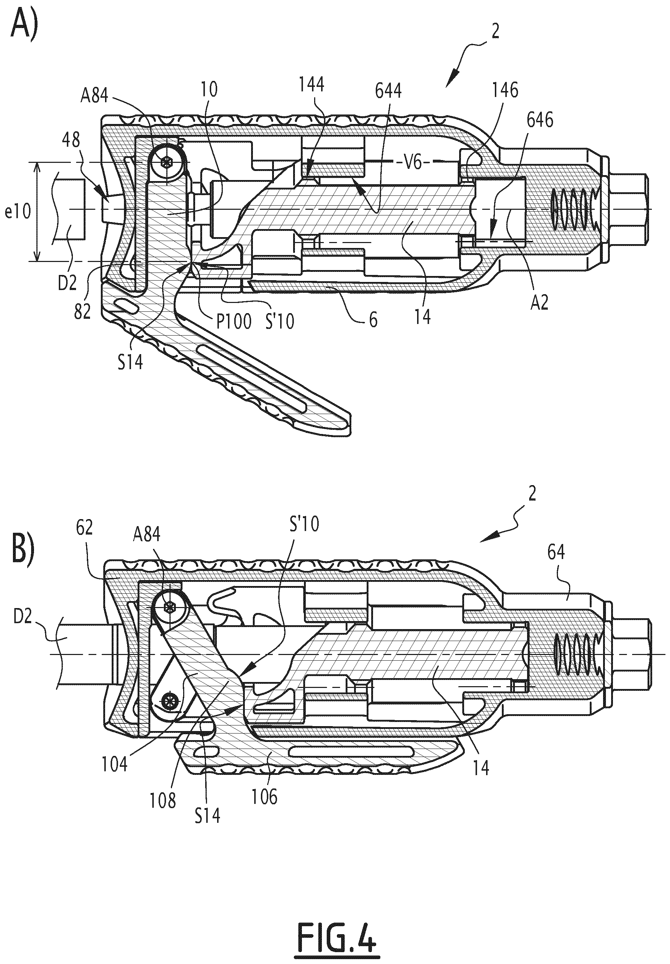

La position de serrage des mâchoires 10 et 12 est représentée sur les inserts A) et B) de la figure 1 ainsi que sur les inserts A) des figures 2 à 4, la durite étant représentée à l'extérieur de l'élément de raccord 2 sur l'insert A) des figures 2 et 4. La position de retrait des mâchoires 10 et 12 est représentée sur l'insert D) de la figure 1, ainsi que sur les inserts B) des figures 2 et 4, la durite D2 étant représentée en position non serrée sur la partie avant 42 de la canule 4 sur l'insert B) des figures 2 et 4.

La première mâchoire 10 définit une surface S10 d'appui sur la durite D2, lorsque la première mâchoire 10 est dans sa position de serrage et lorsque la durite est emmanchée sur la canule. La deuxième mâchoire S12 définit également une surface S12 d'appui contre la durite D2 lorsque la deuxième mâchoire 12 est dans sa position de serrage et lorsque la durite est emmanchée sur la canule.

Chaque surface d'appui S10 ou S12 présente un profil progressif vis-à-vis de la partie avant 42 de la canule 4 qui est tel que, quand la mâchoire 10 ou 12 est en position de serrage, la distance entre l'axe longitudinal A2 et une projection orthogonale de cette surface d'appui S10 ou S12 sur un plan perpendiculaire à l'axe longitudinal est inférieure à la moitié du diamètre extérieur Φ2 de la durite D2 libre et emmanchée sur la partie avant 42 de la canule 4, alors que, quand la mâchoire 10 ou 12 est en position de retrait, la distance entre l'axe longitudinal A2 et la projection de la surface d'appui S10 ou S12 sur le même plan perpendiculaire est supérieure à la moitié du diamètre extérieur Φ2.

La zone définie par la surface d'appui S10, dans laquelle la première mâchoire 10 presse la durite D2 contre la partie avant 42 de la canule 4 dans la position de serrage de la première mâchoire, est comprise, radialement à l'axe longitudinal A2, entre cet axe longitudinal et le premier axe de rotation A84. Dans la position de serrage, la zone dans laquelle la première mâchoire 10 presse la durite D2 est limitée, vers l'arrière c'est-à-dire à l'opposé du premier axe de rotation A84 le long de l'axe longitudinal A2, par un plan frontière P10 qui est perpendiculaire à l'axe longitudinal A2 et qui passe par le point de la surface d'appui S10 le plus éloigné du premier axe de rotation A84 selon une direction parallèle à cet axe longitudinal. On note d10 la distance, mesurée parallèlement à l'axe longitudinal A2, entre le premier axe de rotation A84 et le plan frontière P10.

La distance d10 est le bras de levier maximum de l'effort résistant exercé par la durite D2 sur la première mâchoire 10 en position de serrage, lorsque la durite est emmanchée sur la canule 4.

La zone définie par la surface d'appui S12, dans laquelle la deuxième mâchoire 12 presse la durite D2 contre la partie avant 42 de la canule 4 dans la position de serrage de la deuxième mâchoire, est comprise, radialement à l'axe longitudinal A2, entre cet axe longitudinal et le deuxième axe de rotation A85. Dans la position de serrage, la zone dans laquelle la deuxième mâchoire 12 presse la durite D2 est limitée, vers l'arrière c'est-à-dire à l'opposé du deuxième axe de rotation A85 le long de l'axe longitudinal A2, par un plan frontière P12 qui est perpendiculaire à l'axe longitudinal A2 et qui passe par le point de la surface d'appui S12 le plus éloigné du deuxième axe de rotation A85 selon une direction parallèle à cet axe longitudinal. On note d12 la distance, mesurée parallèlement à l'axe longitudinal A2, entre le deuxième axe de rotation A85 et le plan frontière P12.

La distance d12 est le bras de levier maximum de l'effort résistant exercé par la durite D2 sur la deuxième mâchoire 12 en position de serrage, lorsque la durite est emmanchée sur la canule 4.

Dans l'exemple des figures, les axes de rotation A84 et A85 sont disposés au même niveau le long de l'axe longitudinal A2, de même que les plans de frontière P10 et P12. Ainsi, les distances d10 et d12 sont égales.

Ceci n'est toutefois pas obligatoire et d'autres répartitions spatiales des premier et deuxième axes de rotation A84 et A85 et des premier et deuxième plans frontière P10 et P12 sont envisageables.

La première mâchoire 10 comprend un bras latéral 104 qui s'étend radialement au premier axe de rotation A84 et qui définit une surface S'10 de réception d'un effort. La surface de réception d'effort S'10 est ménagée sur l'arrière du bras latéral 104 et à l'opposé du premier axe de rotation A84 par rapport à l'axe longitudinal A2. En d'autres termes, dans un plan parallèle à l'axe longitudinal A2 et perpendiculaire au premier axe de rotation A84, le premier axe de rotation A84 et la surface de réception d'effort S'10 sont situés de part et d'autre de l'axe longitudinal A2, comme montré à la figure 4.

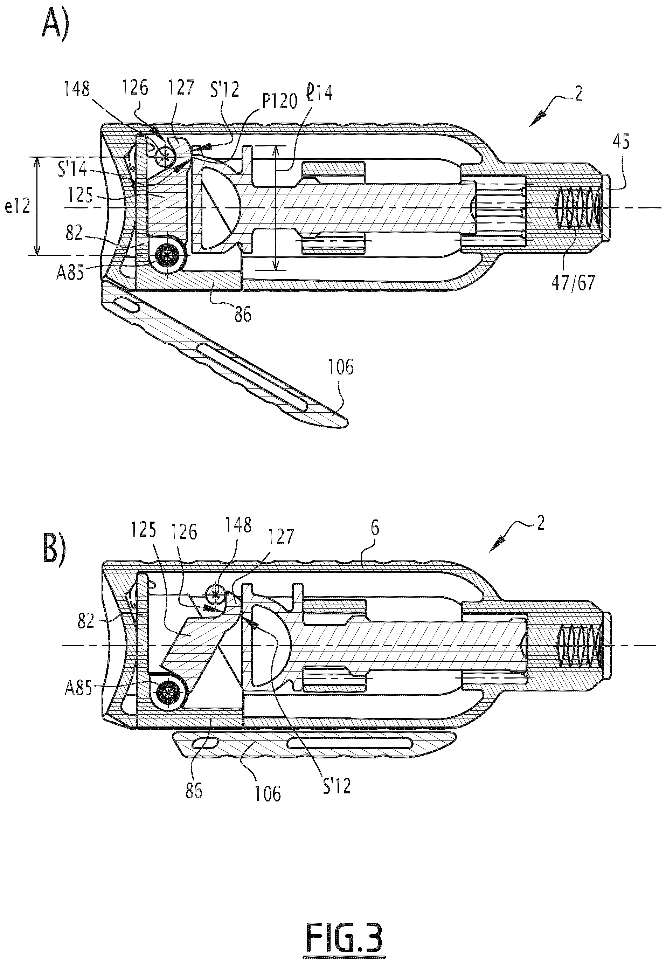

La deuxième mâchoire 12 comprend également un bras latéral 125 qui s'étend radialement au deuxième axe de rotation A85 et qui définit une surface S'12 de réception d'un effort. La surface de réception d'effort S'12 est ménagée sur l'arrière du bras latéral 125. Dans un plan parallèle à l'axe longitudinal A2 et perpendiculaire au deuxième axe de rotation A85, le deuxième axe de rotation A85 et la surface de réception d'effort S'12 sont disposés de part et d'autre de l'axe longitudinal A2, comme montré à la figure 3.

Le bras latéral 125 est pourvu, à son extrémité opposée à l'orifice taraudé 122, d'un crochet 127 qui définit un renfoncement concave 126. La surface de réception d'effort S'12 est ménagée sur l'extérieur du crochet 127, à l'opposé du renfoncement concave 126.

En configuration assemblée de l'élément de raccord 2, les bras latéraux 104 et 125 sont respectivement adjacents aux parois latérales 84 et 85 du boitier 8 et disposés sur l'intérieur de ces parois, vis-à-vis desquelles ils peuvent pivoter, respectivement autour des axes de rotation A84 et A85.

La première mâchoire comprend également un organe de manoeuvre formé par un levier 106 qui dépasse du corps 6 et du boîtier 8 à travers l'encoche 87. Ce levier 106 est monobloc avec la portion de la première mâchoire 10 dans laquelle sont ménagés l'orifice taraudé 102, la surface d'appui S10, ainsi qu'avec le bras latéral 104, donc avec la surface de réception d'effort S'10.

Le levier 106 permet de manoeuvrer la première mâchoire 10 entre sa position de serrage et sa position de retrait, en plaquant le levier 106 en direction des surfaces S''6 et S''8, ce qui le fait pivoter autour du premier axe de rotation A84, dans le sens trigonométrique à la figure 2. La position de serrage de l'insert A) des figures 2 à 4 est une position par défaut prise par la mâchoire 10 si aucun effort n'est exercé sur le levier 106 par un utilisateur de l'élément de raccord 2.

L'élément de raccord 2 comprend également un poussoir 14 qui s'étend le long d'un axe longitudinal A14 confondu avec l'axe longitudinal A2 en configuration montée de l'élément de raccord 2.

Le poussoir 14 est monté à l'intérieur du corps 6, dans le volume interne V6 et autour de la canule 4, entre ses parties avant et arrière 42 et 44 le long de l'axe longitudinal A2, en étant soumis à l'action d'un organe élastique, dans l'exemple formé par un ressort spiral 16, qui tend à repousser le poussoir 14 vers l'avant, c'est-à-dire en direction de l'extrémité avant 62 du corps 6. La position avancée du poussoir 14, représentée sur les inserts A) des figures 2 à 4, est une position par défaut du poussoir, prise par celui-ci sous l'action du ressort spiral 16 tant qu'un utilisateur ne rabat pas le levier 106 vers les surfaces S''6 et S''8.

En variante, le ressort 16 peut être remplacé par un autre organe élastique de renvoi du poussoir vers l'avant du corps 6.

Le poussoir 14 est prévu pour se déplacer longitudinalement, c'est-à-dire en translation parallèlement à l'axe longitudinal A2, par rapport au corps 6, au boitier 8 et aux mâchoires 10 et 12. Le poussoir forme donc un coulisseau vis-à-vis du corps 6, du boîtier 8 et des mâchoires 10 et 12.

Le poussoir 14 comprend une jupe annulaire 142 centrée sur l'axe A14 et pourvue, à chacune de ses extrémités, d'une surface radiale externe de guidage, à savoir, une surface radiale externe de guidage avant 144 et une surface radiale externe de guidage arrière 146.

En pratique, les surfaces radiales externes de guidage 144 et 146 sont à section transversale circulaire. Ainsi, les surfaces externes de guidage sont chacune inscrites dans un cylindre à base circulaire, de diamètre D14 ou D16.

On note D14 et D16 leurs diamètres qui, de préférence, ont la même valeur.

En variante non-représenté de l'invention, les diamètres D14 et D16 ont des valeurs différentes.

On note L14 la longueur axiale de la surface radiale externe de guidage avant 144 et L16 la longueur axiale de la surface radiale externe de guidage arrière 146, ces longueurs axiales étant mesurées parallèlement à l'axe longitudinal A14.

Dans l'exemple, et selon un aspect avantageux de l'invention, les longueurs L14 et L16 sont égales.

En variante non représentée de l'invention, elles peuvent être différentes.

On note S15 la surface radiale externe de la jupe 142 située, le long de l'axe longitudinal A14, entre les surfaces radiales externes de guidage 144 et 146 qui sont espacées l'une de l'autre le long de l'axe longitudinal A2. On note D15 le diamètre de la surface S15.

Ce diamètre D15 est strictement inférieur aux diamètres D14 et D16. En d'autres termes, la surface S15 définit une surface de jonction cylindrique dont le diamètre D15 est inférieur au diamètre D14 de la surface radiale externe de guidage avant 144 et au diamètre D16 de la surface radiale externe de guidage arrière 146.

Le corps 6 est, quant à lui, pourvu d'une surface radiale interne de guidage avant 644 et d'une surface radiale interne de guidage arrière 646, toutes deux centrées sur l'axe longitudinal A2. La surface radiale interne de guidage avant 644 est ménagée au centre d'une nervure périphérique interne 662 de la partie intermédiaire 66 du corps 6. La surface radiale interne de guidage arrière 644 est ménagée à la jonction entre les parties intermédiaire 66 et arrière 64 du corps 6.

On note respectivement L64 et L66 la longueur axiale des surfaces radiales internes avant et arrière 644 et 646, ces longueurs axiales étant mesurées parallèlement à l'axe longitudinal A2.

La surface radiale interne avant 644 est pourvue de cannelures 648 qui s'étendent sur toute sa longueur L64, alors que la surface radiale interne de guidage arrière 646 est pourvue de cannelures 650 qui s'étendent sur toute sa longueur L66.

Dans un plan radial perpendiculaire à l'axe longitudinal A2, les sommets des nervures qui séparent les cannelures 648 définissent un cercle inscrit dans la surface radiale interne de guidage avant 644, dont on note D64 le diamètre. De la même façon, dans un plan radial à l'axe longitudinal A2, les sommets des nervures qui séparent les cannelures 650 définissent un cercle inscrit à la surface radiale interne de guidage arrière 646, dont on note D66 le diamètre. Ainsi, les surfaces internes de guidage sont chacune inscrites autour d'un cylindre à base circulaire, de diamètre D64 ou D66.

Les diamètres D64 et D66 ont avantageusement la même valeur, comme les diamètres D14 et D16.

En variante non-représenté de l'invention, les diamètres D64 et D66 ont des valeurs différentes.

Dans tous les cas, les diamètres D14, D64, D16 et D66 sont choisis pour que les surfaces radiales de guidage 144 et 644, d'une part 146 et 646 d'autre part, guident efficacement le poussoir 14 en translation le long de l'axe A2, à l'intérieur du corps 6, lors de son coulissement vis-à-vis du corps 6.

Le rapport des diamètres D14 et D64 et le rapport des diamètres D16 et D66 sont tels qu'un jeu de guidage J14 d'épaisseur radiale relativement faible, par exemple de l'ordre de quelques dixièmes de millimètres, est ménagé entre les surfaces radiales externes et internes de guidage 144 et 644, d'une part, 146 et 646, d'autre part. En d'autres termes, les diamètres D14, D16, D64 et D66 sont égaux, au jeu de guidage J14 près.

On note C la course du poussoir 14 sous l'action du ressort 16. Cette course correspond au passage du poussoir 14 de la position de l'insert B) sur l'une des figures 2 à 4, qui est une position arrière du poussoir 14 par rapport au corps 6, à la position de l'insert A) sur ces figures, qui est une position avant du poussoir 14 par rapport au corps 6, ou réciproquement au passage de la position de l'insert A) à celle de l'insert B).

La longueur L64 est supérieure ou égale à la somme de la longueur L14 et de la course C. De la même façon, la longueur L66 est supérieure ou égale à la somme de la longueur L16 et de la course C.

On a les relations suivantes :

$$L64 \geq L14 + C \qquad\qquad \text{(équation 1)}$$

$$L66 \geq L16 + C \qquad\qquad \text{(équation 2)}$$

Grâce à ces relations entre les longueurs L14 et L64, L16 et L66 et la course C, en cours de fonctionnement de l'élément de raccord 2, la surface radiale externe de guidage avant 144 reste en regard de la surface radiale interne de guidage avant 644 et la surface radiale externe de guidage arrière 146 reste en regard de la surface radiale interne de guidage arrière 646, le long de l'axe longitudinal A2.

Sur son côté avant, le poussoir 14 définit une première surface d'appui S14 qui est perpendiculaire à l'axe A14 et qui vient en butée contre la surface de réception d'effort S'10 de la première mâchoire 10, sous l'action du ressort de rappel 16, pour autant que le levier 106 n'est pas rabattu vers le corps 6, c'est-à-dire lorsque la première mâchoire 10 est par défaut dans sa position de serrage. En d'autres termes, par défaut, l'effort élastique du ressort 16 est transmis au poussoir 14 qui exerce, par sa première surface d'appui S14 et sur la surface de réception d'effort S'10, un effort axial dirigé vers l'avant, lequel a pour effet de ramener la première mâchoire 10 dans sa position de serrage.

Ainsi, le ressort de rappel 16, qui est un organe de rappel élastique du poussoir 14 vers sa position avancée, est également un organe de renvoi de la première mâchoire 10 vers sa position de serrage.

Le poussoir 14 est orienté autour de l'axe A2 de telle sorte que sa surface d'appui S14 est située, dans un plan perpendiculaire au premier axe de rotation A84, du côté de l'axe longitudinal A2 opposé à ce premier axe de rotation 84. On note e10 un écart radial, mesuré perpendiculairement à l'axe longitudinal A2, dans un plan perpendiculaire au premier axe de rotation A84, entre le premier axe de rotation A84 et le point de contact P100 de la surface de réception d'effort S'10 de la première mâchoire 10 et de la surface S14 dans ce plan perpendiculaire au premier axe de rotation A84. Ce plan perpendiculaire au premier axe de rotation A84 est, dans l'exemple des figures, celui de la figure 4, où l'écart radial e10 est repéré.

Cet écart radial e10 est le bras de levier par rapport à l'axe de rotation A84 de l'effort transmis entre les surfaces S14 et S'10 lorsque la première mâchoire 10 est dans sa position de serrage. Cet écart radial e10 a une valeur supérieure à la valeur de la première distance d10.

Ceci provient notamment du fait que la surface de réception d'effort S'10 est ménagée sur la tranche d'une bosse 108 définie par le bras latéral 104, à l'opposé de l'orifice taraudé 102 par rapport à un plan parallèle au premier axe de rotation A84 et contenant l'axe longitudinal A2.

Ainsi, le bras de levier, autour du premier axe de rotation A84, de l'effort transmis entre les surfaces S14 et S'10 est supérieur au bras de levier maximum de l'effort de serrage exercé sur la durite 2 par la surface d'appui S10 de la première mâchoire 10. L'effort transmis entre les surfaces S14 et S'10 est donc amplifié par le rapport de la valeur de l'écart radial e10 sur la valeur de la distance d10. Il est donc garanti que la première mâchoire 10 est efficacement maintenue en position de serrage par le poussoir 14 et le ressort 16, malgré l'effort résistant exercé par la durite D2.

Avantageusement, un rapport entre la valeur du premier écart axial e10 et la valeur de la première distance d10 est compris entre 1,5 et 10, de préférence entre 4 et 6, de préférence encore égal à 5.

Le poussoir 14 définit également une deuxième surface d'appui S'14 qui, dans l'exemple des figures, est coplanaire avec la première surface d'appui S14, même si cela n'est pas obligatoire.

La deuxième surface d'appui S'14 est, de préférence, perpendiculaire à l'axe longitudinal A14 et elle est configurée pour venir en butée contre la surface de réception d'effort S'12 de la deuxième mâchoire 12, comme visible à la figure 3.

On note e12 un écart radial, mesuré perpendiculairement à l'axe longitudinal A12 et dans un plan perpendiculaire au deuxième axe de rotation A85, entre le deuxième axe de rotation A85 et le point de contact P120 de la surface de réception d'effort S'12 de la deuxième mâchoire 12 et de la surface S'14. Ce plan perpendiculaire au deuxième axe de rotation A85 est, dans l'exemple des figures, celui de la figure 3, où l'écart e12 est repéré.

La surface S'14 exerce, sous l'action du ressort 16, un effort d'appui sur la surface de réception d'effort S'12 qui renvoie par défaut la deuxième mâchoire vers sa position de serrage.

L'écart radial e12 est le bras de levier par rapport à l'axe de rotation A85 de l'effort transmis entre les surfaces S'14 et S'12 lorsque la deuxième mâchoire 12 est dans sa position de serrage. Cet écart radial e12 a une valeur supérieure à celle de la distance d12.

Ainsi, le bras de levier, autour du deuxième axe de rotation A85, de l'effort transmis entre les surfaces S'14 et S'12 est supérieur au bras de levier maximum de l'effort de serrage exercé sur la durite 2 par la surface d'appui S12 de la deuxième mâchoire 12. L'effort transmis entre les surfaces S'14 et S'12 est donc amplifié par le rapport de la valeur l'écart radial e12 sur la valeur la distance d12. Il est donc garanti que la deuxième mâchoire 12 est efficacement maintenue en position de serrage par le poussoir 14 et le ressort 16, malgré l'effort résistant exercé par la durite D2.

Le poussoir 14 comprend également un doigt 148 qui est engagé dans le renfoncement 126 de la deuxième mâchoire 12. Le doigt 148 constitue un relief du poussoir 14 destiné à interagir avec la deuxième mâchoire 12. En variante, le doigt 148 peut être remplacé par un autre relief. Qu'il s'agisse du doigt ou d'un autre relief, il exerce sur la deuxième mâchoire 12 un effort de déplacement de cette mâchoire de sa position de serrage vers sa position de retrait, comme expliqué ci-après.

Lorsqu'un utilisateur exerce sur le levier 106 un couple C106 autour du premier axe de rotation A84, qui a pour effet de faire passer ce levier donc l'ensemble de la première mâchoire 10 de la position des inserts A) à la position des inserts B) aux figures 2 à 4, le bras 104 de la première mâchoire 10, qui est solidaire du levier 106, exerce par sa bosse 108 un effort qui repousse le poussoir 14 en direction de l'extrémité arrière 64 du corps 6. En d'autres termes, la surface S'10 constitue alors une surface d'appui contre la surface S14 qui reçoit l'effort exercé par la mâchoire 10, cet effort ayant une composante axiale parallèle à l'axe longitudinal A2 et dirigée vers l'arrière, qui s'oppose à l'effort élastique du ressort 16.

Si le couple exercé C106 est suffisamment intense, le poussoir 14 recule vers l'arrière sous l'action de l'effort transmis entre les surfaces S'10 et S14, ce qui est visible par la comparaison des inserts B) aux inserts A) sur les figures 2 à 4. C'est ce qui permet de ramener la mâchoire 10 dans sa position de retrait représentée sur les inserts B) des figures 2 à 4.

Le doigt 148 du poussoir 14 recule avec le reste de ce poussoir, ce qui a pour effet d'exercer sur la surface concave du crochet 127, dans le renfoncement 126, un effort d'entraînement de la mâchoire 12 vers l'extrémité arrière 64 du corps 6. Ceci déplace la deuxième mâchoire 12 vers sa position de retrait représentée sur les inserts B) des figures 2 à 4.

Ainsi, la manoeuvre du levier 106, qui consiste à le rabattre en direction des surfaces S"6 et S"8, a pour effet de déplacer les deux mâchoires 10 et 12 de leurs positions de serrage à leurs positions de retrait respectives.

L'atteinte de ces positions de retrait permet d'introduire la durite D2 sur la partie avant 42 de la canule 4, sans être gênée par les mâchoires 10 et 12.

Il est alors possible pour l'utilisateur de relâcher le levier 106 qui n'exerce alors plus de couple sur la première mâchoire, autour du premier axe de rotation A84, de sorte que le poussoir 14 soumis à l'action du ressort 16 repousse efficacement les deux mâchoires 10 et 12 vers leurs positions de serrage respectives, au moyen de ses surfaces d'appui S14 et S'14 qui agissent respectivement sur les surfaces de réception d'effort S'10 et S'12.

Compte tenu du rapport des valeurs de e10/d10 et e12/d12, l'effort élastique exercé par le ressort 16 est amplifié et efficace pour ramener puis maintenir les deux mâchoires 10 et 12 en position de serrage, malgré l'effort résistant exercé sur les surfaces d'appui S10 et S12 par la surface radiale externe de la durite D2.

On note $\ell14$ la largeur maximale du poussoir 14 mesurée perpendiculairement à l'axe longitudinal A14. Cette largeur définit l'encombrement radial du poussoir 14, c'est-à-dire le diamètre minimum d'un cercle à travers lequel peut passer le poussoir 14.

La largeur $\ell14$ est strictement supérieure aux diamètres D63 et D67.

Ainsi, le poussoir ne peut pas être introduit dans le corps 6, ou sortir de celui-ci, à travers ses extrémités avant 62 et arrière 64.

Dans un but d'optimisation de la gamme de fabrication de l'élément de raccord 2, les composants 6 et 14 sont réalisés simultanément par fabrication additive par jet de liant, parfois dénommé « usinage additif par jet de liant ». Le principe de l'usinage additif par jet de liant consiste à déposer une fine couche de matériau en poudre, puis à appliquer un liant qui va agglomérer les grains de poudre exposés à de la chaleur ou à de la lumière. La source de chaleur ou de lumière est mobile dans un plan et permet l'agglomération des grains correspondant à une tranche des pièces. La production des pièces se fait donc par tranches successives parallèlement à un plan de pose initial. Dans le cas de l'usinage simultané du corps 6 et du poussoir 14, le plan de pose initial peut être choisi comme le plan perpendiculaire à l'axe longitudinal A2 et situé au bout de l'extrémité arrière 64 du corps. Le corps 6 et le poussoir 14 sont réalisés tranche par tranche simultanément sans qu'il soit nécessaire de prévoir une liaison entre ces deux pièces. Elles sont maintenues en place par les grains de poudre qui n'ont pas été agglomérés. Une fois le corps 6 et le poussoir 14 produits, il est nécessaire d'évacuer les grains de poudre qui n'ont pas été agglomérés.

Le corps 6 et le poussoir 14 sont réalisés dans le même matériau. Par exemple, la poudre peut être un polyamide et le liant activé par de la chaleur.

La fabrication additive permet de réaliser, en une opération, une première pièce creuse dans laquelle est disposée une deuxième pièce, comme le corps 6 dans lequel est disposé le poussoir 14, sans limitation sur la mise en place de la deuxième pièce au sein de la première pièce creuse.

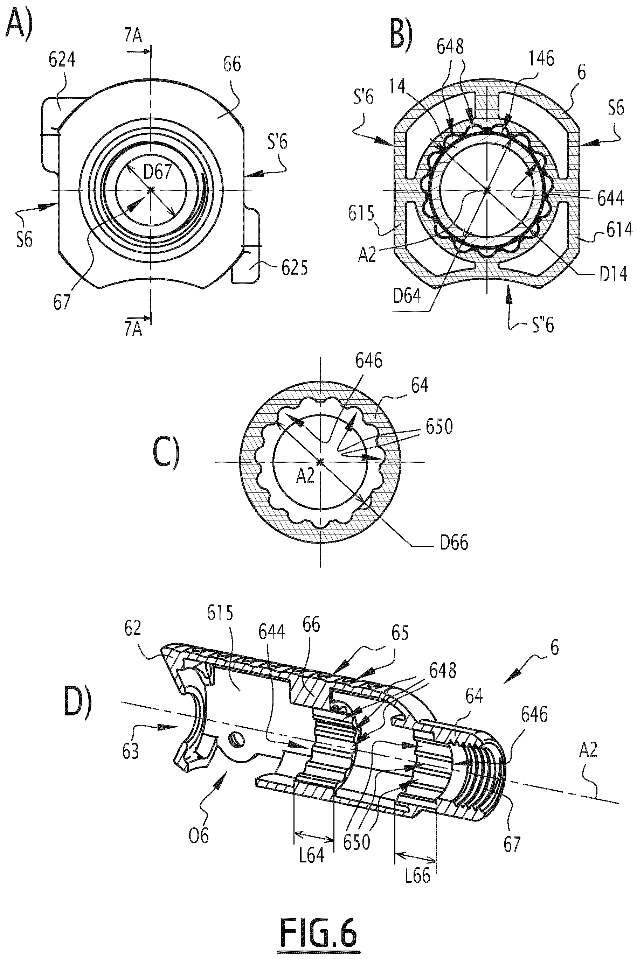

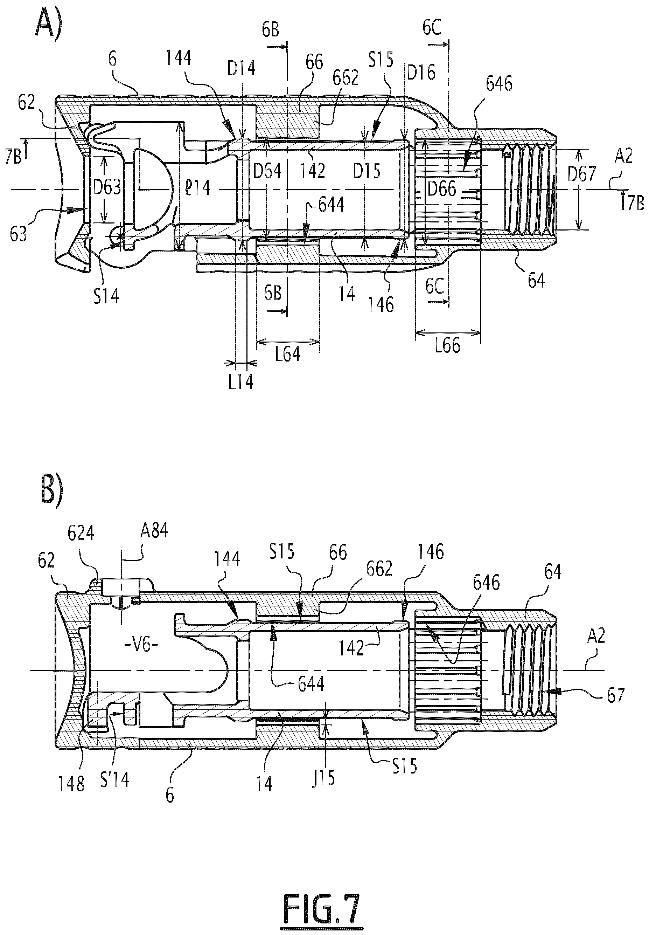

Pour permettre une telle fabrication additive, le poussoir 14 est mobile à l'intérieur du corps 6 jusque dans une position de référence représentée aux figures 6 et 7 dans laquelle les surfaces radiales externes 144 et 146 du poussoir 14 sont respectivement dégagées des surfaces radiales internes 644 et 646 du corps 6. En d'autres termes, dans cette position de référence, les surfaces radiales externes de guidage 144 et 146 sont décalées axialement, le long de l'axe longitudinal A2, des surfaces radiales internes de guidage 644 et 646.

Dans cette position de référence, la partie arrière de la jupe 142 n'est plus engagée dans la partie arrière 64 du corps 6 et la partie avant de la jupe 142 est située plus en avant, le long de l'axe longitudinal A2, que la nervure interne 662.

Dans cette position de référence, les surfaces radiales externes et internes de guidage 144, 146, 644 et 646 peuvent être fabriquées par l'application localisée du liant sur la poudre, sans risque de contact ou de solidarisation intempestive entre ces surfaces même si le jeu de guidage J14 a une épaisseur radiale faible, puisqu'elles sont décalées axialement les unes des autres, le long de l'axe longitudinal A2.

Dans la position de référence, la surface radiale interne de guidage avant 644 est en regard, c'est-à-dire alignée axialement le long de l'axe longitudinal A2 avec, la surface de jonction S15.

Ainsi, un jeu de fabrication J15 existe entre la surface de jonction S15 et la surface radiale interne 644. Ce jeu de fabrication J15 a une épaisseur radiale strictement supérieure à l'épaisseur radiale du jeu de guidage J14.

Par exemple, le jeu de fabrication J15 peut avoir une épaisseur radiale supérieure ou égale à 0.5 mm, de préférence égale à 1 mm.

En d'autres termes, dans la position de référence qui sert à la fabrication additive des éléments 6 et 14 de l'élément de raccord 2, un jeu radial J15 relativement important existe entre le poussoir 14 et la nervure 662, ce jeu radial étant plus épais que le jeu J14 qui sert au guidage en translation du poussoir 14 par rapport au corps 6.

Ceci facilite l'évacuation de grains de poudre qui ne sont pas liés entre eux par le liant au cours de cette fabrication additive, au voisinage des surfaces de guidage.

À cet égard, la présence des cannelures 648, au niveau de la surface radiale interne de guidage avant 644, facilite l'évacuation de la poudre en excès.

La présence des cannelures 650, au niveau de la surface radiale interne de guidage arrière 646, facilite également l'évacuation de la poudre en excès, tout particulièrement dans une variante non-représentée de l'invention où une portion de surface comparable à la surface S15 est engagée dans la surface radiale interne de guidage arrière 646 dans la position de référence du poussoir 14..

Une fois le corps 6 et le poussoir 14 obtenus simultanément par fabrication additive, l'assemblage de l'élément de raccord 2 comprend des étapes successives, effectuées dans l'ordre ci-dessous et consistant à :

- déplacer le poussoir 14 vers une position en butée arrière dans le corps 6 de l'élément de raccord, c'est-à-dire déplacer le poussoir 14 de la position de référence représentée aux figures 6 et 7 à une position comparable à celle des inserts B) des figures 2 à 4 où les surfaces radiales externes de guidage 144 et 146 sont en engagées dans les surfaces radiales internes de guidage 644 et 646;
- pré-positionner les deux mâchoires 10 et 12 dans le boitier 8 ;
- engager le boitier 8 équipé des mâchoires 10 et 12 dans le corps 6, à travers l'ouverture 06, en prenant soin que le bras latéral 105 de la deuxième mâchoire 12 coopère effectivement avec le doigt 148 du poussoir 14, c'est-à-dire en s'assurant que le doigt 148 est bien engagé dans le renfoncement 126 de la deuxième mâchoire ;
- mettre en place et visser les vis 94 et 95 respectivement dans les orifices taraudés 102 et 122 des mâchoires 10 et 12 ;
- monter le ressort de rappel 16 du poussoir 14 dans le volume interne du corps, en appui contre un épaulement 141 du poussoir ;
- mettre en place et visser la canule 4 à l'intérieur du poussoir 14 et du corps 6, grâce au filetage 47 et au taraudage 67, en amenant en appui le ressort 16 contre un épaulement 41 de la canule.

Pour accoupler l'élément de raccord 2 et la durite D2, l'utilisateur prend en main le corps 6 et déplace le levier 106 en direction des surfaces S"6 et S"8 en exerçant le couple C106, ce qui permet d'amener les mâchoires 12 et 14 dans leurs positions de retrait respectives. Il suffit alors d'aligner la durite D2 sur l'axe longitudinal A2 et de déplacer la durite en direction de la canule 4, tout en maintenant le levier 106 appuyé contre le corps 6. Cette opération est facilitée par le fait que la partie avant 42 de la canule 4 dépasse du corps 6 et est pourvue du chanfrein 48.

À un premier stade du rapprochement, la durite D2 entre en contact avec la partie avant 42 la canule et glisse le long de cette partie avant. Ce rapprochement se poursuit jusqu'à ce que la face avant de la durite D2 butte contre un épaulement 43 de la canule qui délimite l'extrémité arrière de la partie avant 42. La durite recouvre alors les nervures périphériques 46. Les mâchoires 10 et 12 sont toujours maintenues en position de retrait par le couple C106 que continue à exercer l'utilisateur sur le levier 106. Elles ne s'opposent donc pas à cet emmanchement.

En libérant le levier 106, c'est-à-dire en cessant d'exercer le couple C106, l'utilisateur laisse les mâchoires revenir en position de serrage, sous l'action du poussoir 14 chargé élastiquement par le ressort 16.

La durite D2 est alors montée sur, raccordée fluidiquement à, et fermement maintenue par rapport à, l'élément de raccord 2.

Pour désaccoupler la durite D2 de l'élément de raccord 2, il suffit de prendre en main le corps 6 et de pousser le levier 106 en direction de ce corps au moyen du couple C106, ce qui ramène les deux mâchoires 10 et 12 dans leurs positions de retrait respectives. L'utilisateur peut alors saisir la durite et la tirer parallèlement à l'axe longitudinal A2, dans un sens d'éloignement vis-à-vis de la canule 4. Comme les mâchoires sont maintenues dans leurs positions de retrait, elles ne s'opposent pas au retrait de la durite D2.

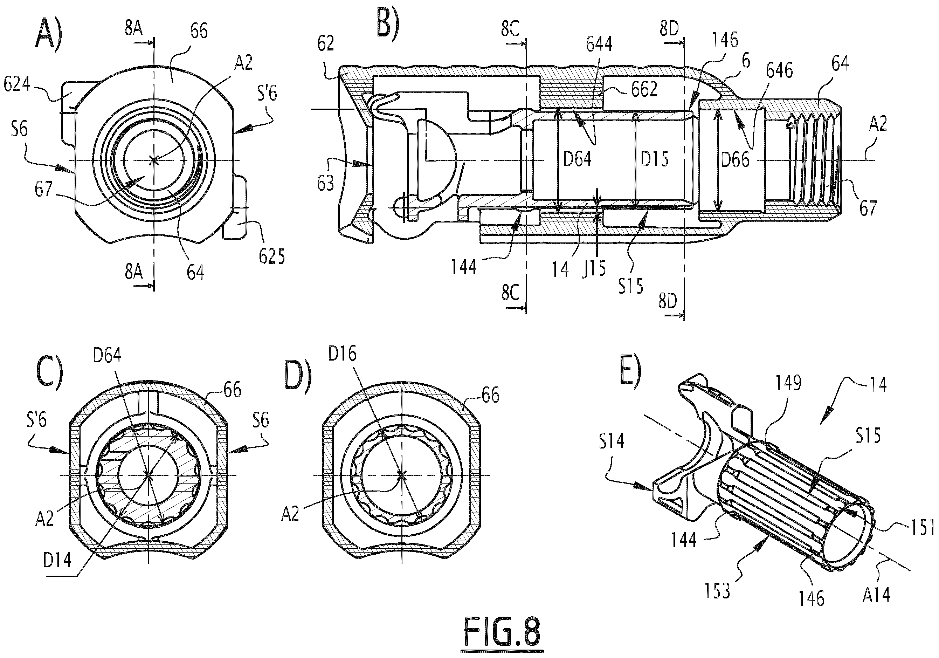

Dans les deuxième, troisième et quatrième modes de réalisation de l'invention représentés aux figures 8 et suivantes, les éléments analogues à ceux du premier mode de réalisation portent des références identiques. Dans ce qui suit, on décrit principalement ce qui distingue ces modes de réalisation du premier mode de réalisation. Si une référence est portée sur l'une des figures 8 et suivantes sans être mentionnée dans la description, ou mentionnée dans la description sans être portée sur une de ces figures, elle correspond au même élément que celui portant la même référence dans le premier mode de réalisation.

Dans le deuxième mode de réalisation représenté à la figure 8, les surfaces radiales internes de guidage 644 et 646 prévues sur le corps 6 sont lisses, c'est-à-dire dépourvues de cannelures, alors que les surfaces radiales externes de guidage avant et arrière 144 et 146 du poussoir 14 sont respectivement pourvues de cannelures 149 et 151.

Le diamètre externe D14 de ces surfaces radiales externes de guidage 144 et 146, mesuré au niveau du sommet de nervures de séparation des cannelures 149 et 151, est légèrement inférieur au diamètre interne D64 des surfaces radiales internes de guidage 644 et 646, ce qui permet de créer un jeu de guidage, comparable au jeu de guidage J14 du premier mode de réalisation, entre les surfaces 144 et 644, d'une part, 146 et 646 d'autre part.

Une surface de jonction S15, définie comme dans le premier mode de réalisation, a un diamètre D15 strictement inférieur au diamètre D14 et est également équipée de cannelures 153.

Un jeu de fabrication J15 est présent, entre la surface de jonction S15 et la surface radiale interne de guidage avant 644, lorsque le poussoir 14 est dans la position de référence représentée sur les inserts A) à D) de la figure 8, cette position de référence étant définie comme dans le premier mode de réalisation.

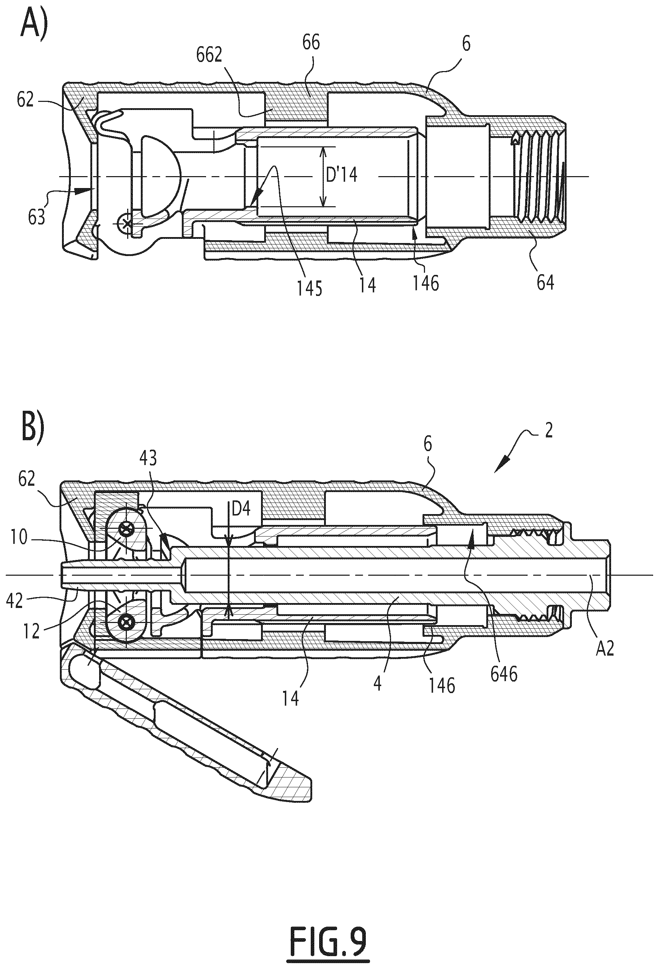

Dans le troisième mode de réalisation de l'invention représenté à la figure 9, le guidage en translation entre le poussoir 14 et le corps 6 est effectué uniquement au niveau de la surface radiale externe de guidage arrière 146 qui coopère avec la surface radiale interne de guidage arrière 646. La jupe 142 du poussoir 14 présente, sur l'extérieur, la même géométrie sur toute sa longueur. En particulier, il n'est pas prévu de surface de jonction de plus petit diamètre, comparable à la surface S15 des premier et deuxième modes de réalisation.

D'autre part, le poussoir 14 est équipé d'une surface radiale interne de guidage avant 145 dont on note D'14 le diamètre interne. Ce diamètre est légèrement supérieur au diamètre externe D4 de la canule 4, en arrière de son épaulement 43, ce qui permet de guider le poussoir 14 en translation axiale le long de la canule 4, avec un jeu d'épaisseur radiale réduite, comparable au jeu J14 du premier mode de réalisation.

Dans les deuxième et troisième modes de réalisation, le corps monobloc 6 et le poussoir 14 sont réalisés ensemble, par fabrication additive, le poussoir étant alors dans une position de référence où sa ou ses surfaces radiales externes de guidage, 144 et 146 ou 146 seulement, ne sont pas en regard de surfaces radiales internes de guidage correspondantes, 644 et 646 ou 646 seulement.

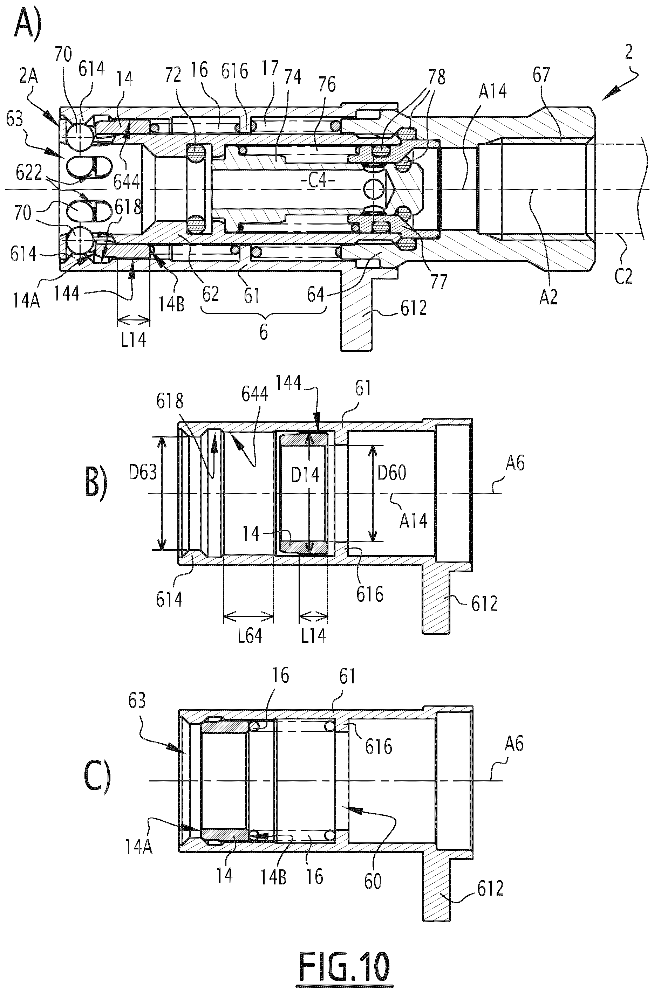

Dans le quatrième mode de réalisation de l'invention représenté à la figure 10, un élément femelle 2 de raccord rapide inclut un corps 6 tripartite, qui comprend un partie interne avant ou distale 62, une partie interne arrière ou proximale 64 vissées l'une sur l'autre, ainsi qu'une partie externe 61 en forme de bague qui entoure les parties internes 62 et 64 et qui est mobile, le long d'un axe longitudinal A2 de l'élément de raccord 2, par rapport aux parties internes avant et arrière 62 et 64. La partie externe 61 comprend une saillie radiale 612 qui permet d'exercer sur cette partie externe un effort parallèle à l'axe A2 et opposé à un effort élastique exercé par un ressort 17.

La partie interne arrière 64 est équipée d'un taraudage 67 de vissage d'une canalisation C2.

La partie externe 61 et la partie avant interne 62 définissent une embouchure 63 de l'élément de raccord 2. La partie avant interne 62 est percée de plusieurs lumières longitudinales 622 qui débouchent dans cette embouchure. Des billes 70 sont engagées dans les lumières 622 et font plus ou moins saillie dans l'embouchure 63, selon qu'elles sont ou non poussées vers l'axe longitudinal A2 par une collerette radiale interne 614 de la partie externe 61 du corps 6.

Ces billes 70 sont prévues pour s'engager dans une gorge périphérique externe d'un embout mâle, complémentaire de l'élément de raccord 2, connu en soi et qui n'est pas représenté. Elles forment des organes de verrouillage de l'embout mâle dans l'élément femelle de raccord 2.

En variante non représentée de l'invention, des organes de verrouillage autres que les billes 70 peuvent être utilisés.

L'élément femelle de raccord 2 comprend également un joint torique d'étanchéité 72, destiné à venir en appui contre l'embout mâle, et un clapet 74 chargé élastiquement par un ressort 76, de telle sorte qu'il obture par défaut un conduit interne C4 défini à la fois par le clapet 74 et par le corps 6. Un siège 77 est monté dans le corps 6 et reçoit en appui le clapet 74 lorsqu'il est en position d'obturation du conduit C4. Des joints toriques d'étanchéité 78 sont montés entre le corps 6, le siège 77 et le clapet 74. Le ressort 76 est installé entre le clapet 74 et le siège 77.

Un poussoir 14 est monté dans un interstice radial défini entre les parties 61 et 62 du corps 6. Ce poussoir est chargé élastiquement vers l'avant de l'élément de raccord 2 par un ressort 16 également disposé dans cet interstice et qui vient en appui, d'une part, contre une face arrière 14B du poussoir 14 et contre une nervure interne 616 de la partie externe 61 du corps 6.

On note 60 l'ouverture centrale de la partie externe 61 du corps 6, qui est définie par la collerette 616, laquelle est une ouverture proximale, dans la mesure où elle est plus proche de la canalisation C2 que l'embouchure 63 qui constitue une ouverture distale du corps 6. Lorsque l'élément femelle de raccord 2 et l'embout complémentaire non représenté sont connectés, le fluide circulant dans le raccord rapide ainsi formé passe à travers l'ouverture 60. On note D60 le diamètre de l'ouverture 60, c'est-à-dire le diamètre interne de la partie externe 61 du corps 6 du côté proximal, au niveau de la nervure 616.

Le poussoir 14 a pour effet de ramener en position les billes 70 vers l'avant des lumières 622, de telle sorte qu'elles se retrouvent par défaut alignées, le long de l'axe longitudinal A2, avec la collerette 614 et, par voie de conséquence, renvoyées dans l'embouchure 63. Ici, le poussoir 14 en forme de bague et peut également être dénommé « bague de mémoire » ou « coulisseau » car il assure, en coulissant par rapport au corps 6, le rappel des billes 70 vers leur position par défaut.

Pour permettre le passage de l'embout mâle dans un sens d'emmanchement des éléments mâle et femelle du raccord rapide, les billes 70 doivent pouvoir être déplacées, selon la plus grande dimension des lumières 622, vers une position dégagée située sur l'arrière de ces lumières, en regard d'une zone en retrait 618 définie à l'intérieur de la partie externe 61 du corps 6. Pour ce faire, les billes 70 peuvent exercer sur une face avant 14A du poussoir 6 un effort axial à l'encontre de l'effort élastique exercé par le ressort 16, ce qui a pour effet de faire reculer le poussoir 14 dans l'interstice ménagé radialement entre les parties 61 et 62 du corps 6.

Le poussoir 14 est donc mobile en translation axiale, le long de l'axe longitudinal A2 et sous l'action du ressort 6 et des billes 70, vis-à-vis du corps 6, plus particulièrement de sa partie externe 61. Pour ce faire, le poussoir 14 définit une surface radiale externe de guidage 144 qui coopère avec une surface radiale interne de guidage 644 ménagée sur l'intérieur de la partie externe 61 du corps 6, au-delà de la zone en retrait 618 par rapport à la face avant 2A de l'élément de raccord 2.

On note L14 la longueur axiale de la surface radiale externe de guidage 144 du poussoir 14. On note L64 la longueur axiale de la surface radiale interne de guidage 644 du corps 6. Les longueurs axiales L14 et L64 sont mesurées parallèlement à l'axe longitudinal A2.

La longueur L64 est supérieure ou égale à la somme de la longueur L14 et de la course C de déplacement du poussoir 14 par rapport au corps 6, entre sa position où il renvoie les billes vers l'avant du corps 6 et sa position où il permet aux billes d'être engagées dans la zone en retrait 618.

On a la relation suivante :

$$L64 \geq L14 + C \qquad\qquad\qquad (\text{équation 1 bis})$$

Grâce à cette relation entre les longueurs L14 et L64 et la course C, en cours de fonctionnement de l'élément de raccord 2, la surface radiale externe de guidage 144 du poussoir 14 reste en regard de la surface radiale interne de guidage 644 du corps 6.

Le diamètre interne de la partie externe 61 du corps 6, au niveau de la collerette 614, définit la valeur minimale du diamètre D63 de l'embouchure 63.

On note D14 le diamètre de la surface radiale externe de guidage 144. Ce diamètre D14 définit l'encombrement maximum du poussoir 14, radialement à l'axe longitudinal A14 du poussoir 14. Le diamètre D14 est strictement supérieur aux diamètres D60 et D63.

Le poussoir 14 peut être amené dans une position de référence représentée à l'insert B) de la figure 10 dans laquelle la surface radiale externe de guidage 144 est dégagée de la surface radiale interne de guidage 644, c'est-à-dire décalée axialement de cette surface, le long d'un axe central A6 du corps 6 qui est superposé avec les axes longitudinaux A2 et A14 en configuration montée de l'élément de raccord 2.

Dans cette position de référence, comme les surfaces de guidage 144 et 644 sont décalées axialement, il est possible de les réaliser simultanément, par fabrication additive, en ajoutant localement un liant thermo-activable à une poudre telle qu'une poudre de polyamide, ce qui permet de fabriquer les éléments 61 et 14 imbriqués l'un dans l'autre.

À partir de cette position, il est possible d'amener le poussoir 14 dans une position de travail, comme représenté à l'insert C) de la figure 10, en mettant en place le ressort 16, entre la face arrière 14B du poussoir 14 et la nervure 616. Dans cette position de travail, les surfaces radiales de guidage 144 et 644 sont en regard l'une de l'autre, selon une direction radiale à l'axe central A6, c'est-à-dire engagées l'une dans l'autre.

Toute caractéristique décrite pour un mode de réalisation ou une variante dans ce qui précède peut être mise en oeuvre pour les autres modes de réalisation et variantes décrits précédemment, pour autant que techniquement faisable.

En particulier, dans les trois premiers modes de réalisation, la position de référence du poussoir est en avant de la position d'utilisation de celui-ci, lors de ses déplacements sur sa course par rapport au corps 6, alors que dans le quatrième mode de réalisation, la position de référence et du poussoir 6 est en arrière de la position d'utilisation de celui-ci, le long de sa course par rapport au corps 6. L'inverse est envisageable.

D'autres techniques d'usinage additif que l'usinage additif par jet de liant peuvent permettre la réalisation simultanée du corps 6 et du poussoir 14. Par exemple, la technique d'usinage additif par multi projections (« MJP » pour « Multi Jet Printing ») mise en oeuvre par une imprimante 3D peut être employée. L'imprimante MJP se compose principalement d'une tête d'impression, d'une plate-forme et d'une lampe UV. Comme toute machine d'impression 3D, le processus nécessite un fichier CAO 3D. L'imprimante 3D imprime ensuite chaque couche du fichier en plastique liquide durcissable aux UV sur une plate-forme plate. Un matériau de support en cire est également projeté pour remplir les vides internes à une pièce ou existant entre deux pièces imbriquées produites simultanément. A la fin de l'usinage du corps 6 et de poussoir 14, la cire qui permet le maintien du poussoir est facilement évacuée du fait des caractéristiques de l'invention. Cette technique d'usinage additif permet de réaliser le corps 6 et le poussoir 14 dans des matériaux différents.

**Revendications**

1. Elément (2) de raccord rapide de connexion de canalisations (C2 ; D2) de fluide, cet élément de raccord comprenant

   - un corps monobloc (6) définissant un passage (C4) s'étendant selon un axe longitudinal (A2) de l'élément de raccord, entre une extrémité proximale (64) et une extrémité distale (62), l'extrémité proximale étant configurée pour être raccordée à une canalisation de fluide (C2) et définissant une ouverture proximale (67 ; 60) de passage du fluide ou d'un conduit (4) dans lequel circule le fluide et l'extrémité distale comportant une embouchure distale (63) de réception d'un élément de raccord (D2) complémentaire,

   **caractérisé en ce que**

   - l'élément de raccord (2) comprend un poussoir (14) monté dans le corps et mobile le long de l'axe longitudinal, entre une position avant du côté de l'extrémité distale et une position arrière du côté de l'extrémité proximale,
   - le corps (6) est pourvu d'au moins une surface radiale interne de guidage (644, 646);
   - le poussoir (14) est pourvu d'au moins une surface radiale externe de guidage (144, 146) configurée pour coopérer par engagement avec la surface radiale interne de guidage (644, 646) pour guider le poussoir lors de ses déplacements selon l'axe longitudinal, entre ses positions avant et arrière ;
   - le poussoir a un encombrement radial défini par sa plus grande dimension radiale (E14, D14),
   - une section de l'ouverture proximale (67 ; 60), transversale à l'axe longitudinal (A2), a une dimension maximale (D67, D60) inférieure à l'encombrement radial ($\ell$14, D14) du poussoir (14) ;
   - une section de l'embouchure distale (63), transversale à l'axe longitudinal, a une dimension maximale (D63) inférieure à l'encombrement radial du poussoir ;
   - le poussoir est monté prisonnier dans un volume interne (V6) du corps (6) ; et
   - le poussoir est mobile, dans le volume interne du corps, jusqu'à une position de référence, dans laquelle la ou chaque surface radiale externe (144, 146) du poussoir est dégagée de toute surface radiale interne (644, 646) du corps (6) et réciproquement.

2. Elément de raccord selon la revendication 1, **caractérisé en ce que**, lorsque le poussoir (14) est dans la position de référence, un jeu (J15) entre une surface (S15) du poussoir et une surface radiale interne (644, 646) du corps (6) en regard de la surface du poussoir a une épaisseur radiale strictement supérieure à l'épaisseur radiale d'un jeu de guidage (J14) entre la surface radiale externe (144, 146) du poussoir et la surface radiale interne (644, 646) du corps engagées l'une dans l'autre.

3. Elément de raccord selon l'une des revendications précédentes, **caractérisé en ce que**

   - le poussoir (14) est pourvu de deux surfaces radiales externes de guidage (144, 146), espacées l'une de l'autre le long de l'axe longitudinal (A2) ;
   - le corps (6) est pourvu de deux surfaces radiales internes de guidage (644, 646);
   - chacune des surfaces radiales internes de guidage est configurée pour coopérer par engagement avec une surface radiale interne de guidage pour guider le poussoir lors de ses déplacements selon l'axe longitudinal, entre ses positions avant et arrière ; et
   - lorsque le poussoir (14) est dans la position de référence, ses deux surfaces radiales externes de guidage (144, 146) sont dégagées des deux surfaces radiales internes de guidage (644, 646) du corps (6).

4. Elément de raccord selon l'une des revendications précédentes, **caractérisé en ce que**

- la surface radiale externe de guidage (144, 146) est inscrite dans un premier cylindre à base circulaire ;
- la surface radiale interne de guidage (644, 646) est inscrite dans un deuxième cylindre à base circulaire ; et
- le diamètre (D14, D16) du premier cylindre est égal au diamètre (D64, D66) du deuxième cylindre, au jeu de guidage (J14) près.

5. Elément de raccord selon l'une des revendications précédentes, **caractérisé en ce que** des cannelures de dégagement (648, 650) sont ménagées dans la surface radiale interne de guidage (644, 646).

6. Elément de raccord selon l'une des revendications précédentes, **caractérisé en ce que** des cannelures de dégagement (149, 151) sont ménagées dans la surface radiale externe de guidage (144, 146).

7. Elément de raccord selon l'une des revendications précédentes, **caractérisé en ce que**

- la surface radiale externe de guidage (14, 16) a une première longueur (L14, L16), mesurée parallèlement à l'axe longitudinal (A2);
- la surface radiale interne de guidage (644, 646) a une deuxième longueur (L64, L66), mesurée parallèlement à l'axe longitudinal ; et
- la deuxième longueur (L64, L66) est supérieure ou égale à la somme de la première longueur (L14, L16) et d'une course (C) du poussoir entre ses positions avant et arrière ou
- la première longueur (L14, L16) est supérieure ou égale à la somme de la deuxième longueur (L64, L66) et de la course (C) du poussoir entre ses positions avant et arrière.

8. Elément de raccord selon l'une des revendications précédentes, **caractérisé en ce qu'**il comprend

- une canule (4) définissant un passage de fluide et s'étendant selon un axe longitudinal (A2) de l'élément de raccord (2), entre une partie avant (42) configurée pour l'emmanchement d'une durite (D2) et une partie arrière (44) destinée à être raccordée à la canalisation de fluide (C2) ;
- le corps monobloc (6) s'étendant selon l'axe longitudinal autour de, et solidairement à, la canule et définissant une embouchure (63) d'accès à la partie avant (42) de la canule ;
- une première mâchoire (10), mobile en rotation, autour d'un premier axe de rotation (A84), perpendiculaire à, et décalé (d84) de, l'axe longitudinal, entre

  ◦ une position de serrage dans laquelle la première mâchoire (10) presse la durite (D2) contre la partie avant (42) de la canule (4), dans une zone comprise, radialement à l'axe longitudinal, entre l'axe longitudinal et le premier axe de rotation et délimitée, le long de l'axe longitudinal, par un plan frontière (P10), perpendiculaire à l'axe longitudinal et distant du premier axe de rotation d'une première distance (d10), mesurée parallèlement à l'axe longitudinal (A2), qui est non nulle, et
  ◦ une position de retrait dans laquelle la première mâchoire (10) ne presse pas la durite contre la partie avant de la canule ;

- un organe de manoeuvre (106), accessible depuis l'extérieur du corps (6), pour le déplacement de la première mâchoire, entre sa position de serrage et sa position relâchée,
- un organe (16) de rappel élastique du poussoir (14) vers sa position avant ;
**en ce que** le poussoir est logé prisonnier dans le volume interne (V6) du corps, autour de la canule (4) et pourvu d'une première surface d'appui (S14) contre la première mâchoire (10) ;
**en ce que** la première surface d'appui (S14) du poussoir est configurée pour exercer sur la première mâchoire (10) un effort de déplacement de la première mâchoire de sa position relâchée vers sa position de serrage ;
**en ce que** la première surface d'appui (S14) est disposée, par rapport à l'axe longitudinal (A2), à l'opposé du premier axe de rotation (A84) ;
et **en ce que**, lorsque la première mâchoire (10) est dans sa position de serrage, avec la première surface d'appui (S14) contre la première mâchoire, un premier écart radial (e10), mesuré perpendiculairement à l'axe longitudinal, entre le premier axe de rotation (A84) et un point (P100) de contact de la surface de réception d'effort (S'10) de la première mâchoire (10) et de la première surface d'appui (S14) a une valeur supérieure à la valeur de la première distance (d10).

9. Procédé de fabrication d'un élément de raccord rapide de connexion de canalisations de fluide selon l'une des revendications précédentes, **caractérisé en ce qu'**il comprend une étape consistant à

   a) réaliser simultanément par fabrication additive une partie au moins du corps monobloc (6) et le poussoir (14), alors que le poussoir est dans sa position de référence.

EP 4 497 987 A1

FIG.1

16

FIG.2

A)

B)

FIG.3

FIG.4

A)

942 ⎤
944 ⎬ 94
946 ⎦

624
62
148
D2
63
625
956 ⎤
954 ⎬ 95
952 ⎦

V6
S6
6
65
64
O6

842
84
82
83
87
S"8
8

2

46 S42
48 43
42 46
4
41 47 45
44
A2

102 104 10
S10 S'10
108
106
126 127 12
125 122
S12

B)
14
L14 S15 L16
S14
148
S'14
144 142 146
A14

FIG.5

## FIG.6

FIG.7

FIG.8

A)

B)

FIG.9

A)

B)

C)

FIG.10

Europäisches
Patentamt

European
Patent Office

Office européen
des brevets

**RAPPORT DE RECHERCHE EUROPEENNE**

Numéro de la demande

EP 24 19 1226

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | EP 4 056 883 A1 (STAUBLI SA ETS [FR]) 14 septembre 2022 (2022-09-14) * alinéas [0013] - [0123]; figures 4,5,10 * | 1-9 | INV. F16L37/084 F16L37/127 F16L37/23 F16L37/34 B33Y80/00 |
| | - - - - - | | |
| A,D | WO 2012/166546 A2 (RAYMOND A & CIE [FR]; HEMINGWAY TODD L [US]; JACKSON NICHOLAS [US]) 6 décembre 2012 (2012-12-06) * le document en entier * | 9 | |
| | - - - - - | | |

**DOMAINES TECHNIQUES RECHERCHES (IPC)**

F16L
B33Y

Le présent rapport a été établi pour toutes les revendications

| Lieu de la recherche | Date d'achèvement de la recherche | Examinateur |
|---|---|---|
| Munich | 11 octobre 2024 | Fromentel, Henri |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

..........................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 24 19 1226

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

11-10-2024

| Document brevet cité au rapport de recherche | | Date de publication | Membre(s) de la famille de brevet(s) | | Date de publication |
|---|---|---|---|---|---|
| EP 4056883 | A1 | 14-09-2022 | CN | 115111450 A | 27-09-2022 |
| | | | EP | 4056883 A1 | 14-09-2022 |
| | | | FR | 3120675 A1 | 16-09-2022 |
| | | | KR | 20220126647 A | 16-09-2022 |
| | | | US | 2022290787 A1 | 15-09-2022 |
| WO 2012166546 | A2 | 06-12-2012 | BR | 112013030838 A2 | 29-11-2016 |
| | | | CN | 103703296 A | 02-04-2014 |
| | | | EP | 2715204 A2 | 09-04-2014 |
| | | | JP | 6140691 B2 | 31-05-2017 |
| | | | JP | 2014520004 A | 21-08-2014 |
| | | | US | 2014084583 A1 | 27-03-2014 |
| | | | WO | 2012166546 A2 | 06-12-2012 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2012166546 A2